Europäisches Patentamt

European Patent Office

Office européen des brevets

(11) Veröffentlichungsnummer: **0 305 786**
**A2**

(12) # EUROPÄISCHE PATENTANMELDUNG

(21) Anmeldenummer: **88113091.8**

(22) Anmeldetag: **11.08.88**

(51) Int. Cl.⁴: **B29C 45/14** , **B29C 65/64** , **F16L 41/00** , **F16L 47/00** , **//B29L31:24**

(30) Priorität: **31.08.87 DE 3729056**

(43) Veröffentlichungstag der Anmeldung:
**08.03.89 Patentblatt 89/10**

(84) Benannte Vertragsstaaten:
**DE ES FR GB IT SE**

(71) Anmelder: **METZELER Gesellschaft mit beschränkter Haftung**
**Gneisenaustrasse 15**
**D-8000 München 50(DE)**

(72) Erfinder: **Härtel, Volker, Dr.**
**Fichtenstrasse 50**
**D-8034 Germering(DE)**
Erfinder: **Kahlefeld, Hermann**
**Stolperstrasse 8**
**D-6944 Hemsbach(DE)**
Erfinder: **Schreiber, Hans**
**Dr. Werner-Strasse 42**
**D-8038 Gröbenzell(DE)**

(74) Vertreter: **Michelis, Theodor, Dipl.-Ing.**
**Gneisenaustrasse 15**
**D-8000 München 50(DE)**

(54) **Verfahren zur Herstellung einer Formschlauchverzweigung aus Gummi und nach diesem Verfahren hergestellte Verzweigung.**

(57) Bei einem Verfahren zur Herstellung einer Formschlauchverzweigung aus Gummi, bei dem auf die freien Rohrstutzen eines Verzweigungsrohrstückes aus Metall oder Kunststoff ausvulkanisierte Schlauchabschnitte geschoben und befestigt werden, ist zur Erzielung einer nahezu absoluten Dichtigkeit und einer hohen Dauerstandsfestigkeit gegen Druck-Wechselbeanspruchungen erfindungsgemäß vorgesehen, daß die Schlauchabschnitte trocken auf die Rohrstutzen aufgeschoben und mit einem außenliegenden, geschlossenen Ring aus starrem Material gegen die Rohrstutzen verspannt werden. Zusätzlich können die aufgeschobenen Schlauchabschnitte mit den Ringen und den freiliegenden Bereichen des Verzweigungsrohrstückes mit einer auszuvulkanisierenden Gummimanschette umspritzt werden.

FIG.1

## Verfahren zur Herstellung einer Formschlauchverzweigung aus Gummi und nach diesem Verfahren hergestellte Verzweigung

Die Erfindung bezieht sich auf ein Verfahren zur Herstellung einer Formschlauchverzweigung aus Gummi mit mindestens einem Abzweig für einen Teilmedienstrom, insbesondere für Kühlwasserschläuche in Kraftfahrzeugen, bei dem auf die freien Rohrstutzen eines Verzweigungsrohrstückes aus Metall oder Kunststoff ausvulkanisierte Schlauchabschnitte geschoben und befestigt werden.

Ein derartiges Verfahren ist aus der DE-OS 32 39 623 bekannt. Danach werden über die aufgeweiteten Enden der Rohrstutzen Schlauchabschnitte geschoben, nachdem die Rohrstutzen auf ihrer Außenseite mit einem Haftvermittler und einer vulkanisierbaren Klebemasse versehen sind. Hierbei besteht jedoch die Gefahr, daß wegen der Elastizität und der engen Passung der aufzuschiebenden Schlauchenden die Klebemasse auf dem Rohrstutzen von den Stirnflächen der Schlauchenden beim Aufschieben weggedrückt wird.

Ein ähnliches Verfahren ist aus der DE-OS 36 04 922 bekannt, bei dem die Rohrstutzen auf ihrer Außenfläche eine umlaufende Nut aufweisen, in die nach Aufschieben der Schlauchabschnitte eine vulkaniscierbare Masse eingespritzt wird.

Beide Verfahren haben den Nachteil, daß sie den bei derartigen als Kühlwasserschläuche eingesetzten Schlauchverzweigungen auftretenden hohen Druck-Wechselbeanspruchungen unter erhöhter Temperatur nur unzureichend standhalten und daß allmählich von der Stirnseite der Rohrstutzen her eine Ablösung der aufgeschobenen Schlauchabschnitte von den Rohrstutzen erfolgt, so daß die Gefahr eines Undichtwerdens einer solchen Schlauchverzeigung gegeben ist.

Der Erfindung liegt daher die Aufgabe zugrunde, ein Verfahren auzugeben, mit dem eine derartige Formschlauchverzweigung geschaffen werden kann, ohne daß dabei die Gefahr eines Ablösens der Schlauchabschnitte und damit eines Undichtwerdens der Verzweigung besteht.

Zur Lösung dieser Aufgabe ist erfindungsgemäß vorgesehen, daß die Schlauchabschnitte trocken auf die Rohrstutzen aufgeschoben, mit einem außenliegenden, geschlossenen Ring aus starrem Material gegen die Rohrstutzen verspannt und die aufgeschobenen Schlauchabschnitte mit den Ringen und den freiliegenden Bereichen des Verzweigungsrohrstückes mit einer auszuvulkanisierenden Gummimanschette umspritzt werden.

Zur Verspannung können dabei geschlossene Ringe aus Polyamid verwendet werden.

Es ist aber auch möglich, als Ringe Schlauchschellen aus flachen Stahlbändern mit einem flachen Spannschloß zu verwenden.

Nach diesem Verfahren werden also durch die starren Ringe die Schlauchabschnitte dauerhaft gegen die Rohrstutzen verspannt, so daß ein Aufweiten und Ablösen nicht möglich ist. Die aufgespritzte Gummimanschette hat dann noch zusätzliche Abdichtfunktionen, während die eigentliche Halterung allein durch die Ringe erfolgt.

Bei einer entsprechenden Verzweigung von Formschläuchen aus Gummi sind die aufgeschobenen Schlauchabschnitte mittels umlaufender Ringe gegen die Rohrstutzen verspannt.

Die Ringe können dabei einstückig ausgebildet sein und aus Polyamid bestehen.

Es ist aber auch möglich, daß die Ringe aus Schlauchschellen in Form von offenen Stahlbändern bestehen, die über flache Spannschlösser verspannt sind.

Anhand einer schematischen Zeichnung sind Aufbau und Wirkungsweise eines Ausführungsbeispiels nach der Erfindung näher erläutert. Dabei zeigen

Fig. 1 einen Längsschnitt durch eine entsprechende Schlauchverzweigung im fertigen Zustand und

Fig. 2 die perspektivische Ansicht eines aufgeschobenen Schlauchabschnitts mit Schlauchschelle.

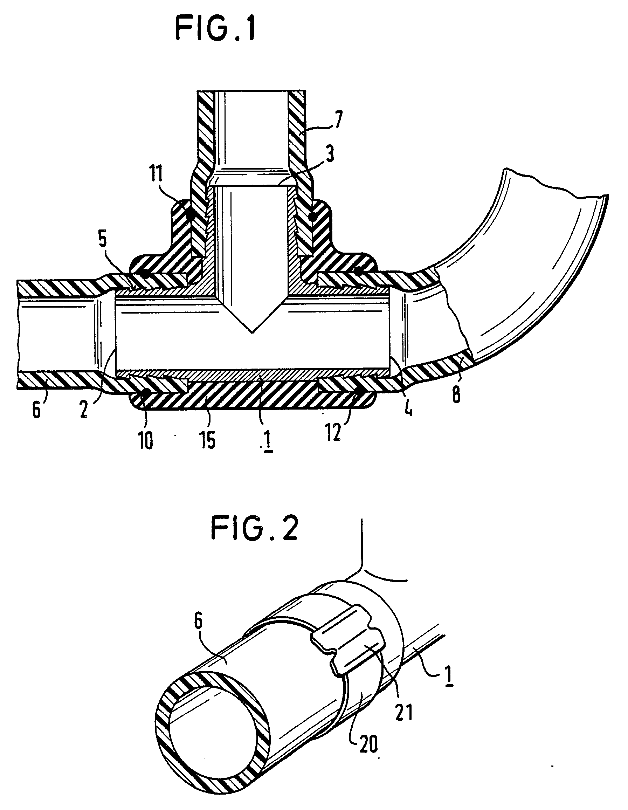

In der Figur 1 ist als einfachstes Beispiel für eine Formschlauchverzweigung ein Schlauch mit einem einzigen Abzweig, d.h. eine T-förmige Schlauchverzweigung gezeigt, da hieran das erfinderische Prinzip am einfachsten erläutert werden kann. Danach weist die Schlauchverzweigung ein T-förmiges Verzweigungsrohrstück 1 aus Metall oder Kunststoff mit den Rohrstutzen 2, 3 und 4 auf, wobei der Rohrstutzen 3, der den eigentlichen Abzweig bildet, im Winkel von 90° angesetzt ist. Dieser Abzweig 3 kann aber auch in jedem beliebigen anderen Winkel entsprechend der geforderten Ausgestaltung von Hauptrohr abzweigen.

Auf die freien Rohrstutzen 2, 3 und 4, die zur besseren Haftung auf ihrer Außenseite mit einer entgegen der Abzugsrichtung verlaufenden, sägezahnförmigen Profilierung 5 versehen sind, werden nun die entsprechenden, bereits ausvulkanisierten Schlauchabschnitte 6,7 und 8 trocken aufgeschoben, d.h. ohne Anbringen eines Haftmittels zwischen den Rohrstutzen und den Schlauchenden. Die Schlauchabschnitte 6, 7 und 8 werden dann durch aufgesetzte, geschlossene Ringe 10, 11, und 12 gegen die Rohrstutzen 2,3 und 4 verspannt. Diese Ringe 10, 11 und 12 kreisscheibenförmigen oder rechteckigen Querschnitts können beispeilsweise aus Polyamid bestehen und werden zweckmäßigerweise auf die Schlauchabschnitte 6, 7 und 8 aufgeschoben, bevor diese dann auf die Rohrstutzen 2, 3 und 4 gepreßt werden.

Da diese Ringe 10, 11 und 12 einen geringeren Innendurchmesser aufweisen als der Außendurchmesser der Schlauchabschnitte 6, 7 und 8 im aufgeschobenen Zustand beträgt, erfolgt somit eine starre, gleichmäßig über den Umfang verteilte Pressung der Schlauchabschnitte 6, 7 und 8 gegen die Rohrsutzen 2, 3 und 4. Durch diese starke Pressung einerseits und durch die Profilierung 5 der Rohrstutzen 2, 3 und 4 andererseits, können die Schlauchabschnitte 6, 7 und 8 praktisch nicht mehr von den Rohrstutzen 2, 3 und 4 abgezogen werden. Darüber hinaus ist bei entsprechender Pressung eine hohe Dichtigkeit gegeben, die auch stark wechselnden Druckbeanspruchungen Stand hält, da eine Aufweitung der Schlauchabschnitte 6, 7 und 8 im verspannten Bereich praktisch nicht möglich ist.

In einem weiteren Arbeitsgang können anschließend die aufgeschobenen Schlauchabschnitte 6, 7 und 8, die Ringe 10, 11 und 12 sowie die noch freiliegenden Bereiche des Verzweigungsrohrstükkes 1 mit einer Gummimanschette 15 umspritzt werden, um eine zusätzliche Abdichtung der Schlauchabschnitte und eine Lagesicherung sowie Abschirmung gegen Beschädigungen der Ringe 10, 11 und 12 sicherzustellen.

Da sich das Material der Gummimanschette 15 nach der Ausvulkanisierung mit dem Material der Schlauchabschnitte 6, 7 und 8 verbindet, ist somit noch eine zusätzliche Verankerung und Halterung für die Schlauchabschnitte 6, 7 und 8 gewährleistet.

In Fig. 2 ist am linken Schlauchabschnitt 6 eine andere Befestigungsart gezeigt. Hierbei werden sog. Schlauchschellen verwendet, bei denen ein flaches Stahlband 20 pneumatisch oder hydraulisch um den Schlauchabschnitt 6 verspannt und die freien Enden des Stahlbandes 20 in einen sehr flach bauenden Spannschloß 21 verklemmt und unlösbar arretiert sind.

Bei einer derartigen, sehr dauerhaften und dichten Verspannung ist praktisch ein Umspritzen mit einer Gummimanschette nicht mehr erforderlich.

Mit dem beschriebenen Verfahren ist es also möglich, eine Formschlauchverzweigung zu schafen, die ohne Haftmittel und Haftverbindungen zwischen den Rohrstutzen des Verzweigungsrohrstükkes und den aufgeschobenen Schläuchen eine absolut dichte und insbesondere dauerfeste Verbindung bewirkt, die auch stark wechselnden Dauerbeanspruchungen standhält.

## Ansprüche

1. Verfahren zur Herstellung einer Formschlauchverzweigung aus Gummi mit mindestens einem Abzweig für einen Teilmedienstrom, insbesondere für Kühlwasserschläuche in Kraftfahrzeugen, bei dem auf die freien Rohrstutzen eines Verzweigungsrohrstückes aus Metall oder Kunststoff ausvulkanisierte Schlauchabschnitte geschoben und befestigt werden, dadurch gekennzeichnet, daß die Schlauchabschnitte trocken auf die Rohrstutzen aufgeschoben, mit einem außenliegenden, geschlossenen Ring aus starrem Material gegen die Rohrstutzen verspannt und die aufgeschobenen Schlauchabschnitte mit den Ringen und den freiliegenden Bereichen des Verzweigungsrohrstükkes mit einer auszuvulkanisierenden Gummimanschette umspritzt werden.

2. Verfahren nach Anspruch 1, dadurch gekennzeichnet, daß geschlossene Ringe aus Polyamid verwendet werden.

3. Verfahren nach Anspruch 1, dadurch gekennzeichnet, daß als Ringe Schlauchschellen aus flachen Stahlbändern mit einem flachen Spannschloß verwendet werden.

4. Verzweigung von Formschläuchen aus Gummi, insbesondere Kraftfahrzeug-Kühwasserschläuche, mit auf die freien Rohrstutzen eines Verzweigungsrohrstückes aus Metall oder Kunststoff aufgeschobenen, ausvulkanisierten Schlauchabschnitten, dadurch gekennzeichnet, daß die aufgeschobenen Schlauchabschnitte (6, 7, 8) mittels umlau fender, geschlossener Ringe (10, 11, 12) gegen die Rohrstutzen (2, 3, 4) verspannt sind.

5. Verzweigung nach Anspruch 4, dadurch gekennzeichnet, daß die Ringe (10, 11, 12) einstückig ausgebildet sind und aus Polyamid bestehen.

6. Verzweigung nach Anspruch 4, dadurch gekennzeichnet, daß die Ringe (10, 11, 12) aus Metall bestehen.

7. Verzweigung nach Anspruch 4, dadurch gekennzeichnet, daß die Ringe aus Schlauchschellen in Form von offenen Stahlbändern (20) bestehen, die über flache Spannschlösser (21) verspannt sind.

8. Verzweigung nach Anspruch 4, dadurch gekennzeichnet, daß die Rohrstutzen (2, 3, 4) mit einer entgegen der Abzugsrichtung verlaufenden, sägezahnförmigen Profilierung (5) versehen sind.

9. Verzweigung nach Anspruch 5 oder 7, dadurch gekennzeichnet, daß die aufgeschobenen Schlauchabschnitte (6, 7, 8) mit den Ringen (10, 11, 12; 20, 21) und den freiliegenden Bereichen des Verzweigungsrohrstückes (1) mit einer Gummimanschette (15) umspritzt sind.

# FIG.1

# FIG.2